# EUROPEAN PATENT APPLICATION

(11) **EP 4 847 466 A1**
(43) Date of publication of application: **02.12.2026**
(21) Application number: 25222560.2
(22) Date of filing: 11.12.2025
(51) Int. Cl.: C03C 13/06, C03C 25/42, C03C 3/087

(54) **HIGH-TEMPERATURE-RESISTANT BASALT FIBER, PREPARATION METHOD THEREFOR AND USE THEREOF**

(30) Priority: 28.05.2025 CN 202510696731
(71) Applicant: Qinhuangdao Glass Industry Research and Design Institute Company Limited, Qinhuangdao, Hebei 066001 (CN)
(72) Inventor: CHEN, Fu, Qinhuangdao, 066001 (CN); XU, Xinru, Qinhuangdao, 066001 (CN); LIU, Shuofang, Qinhuangdao, 066001 (CN); XIA, Weimei, Qinhuangdao, 066001 (CN); CHEN, Zhaomin, Qinhuangdao, 066001 (CN)
(74) Representative: Bryn Aarflot AS

(57) **Abstract**

The present invention relates to the technical field of basalt fibers, and discloses a high-temperature-resistant basalt fiber and a preparation method therefor and use thereof. The method for preparing a high-temperature-resistant basalt fiber provided by the present invention comprises the following steps: mixing basalt, zircon, potassium feldspar, rutile and molybdenite, melting the mixture, and drawing the mixture to obtain a matrix material; mixing a zinc source and a nickel source to obtain a mixed solution; and impregnating the matrix material in the mixed solution, and then solidifying and pressing the impregnated matrix material to obtain the high-temperature-resistant basalt fiber. Zinc and nickel have high thermal stability, the matrix material is impregnated in a mixed solution of zinc source and nickel source. The functional groups on the surface of the basalt fiber can form chemical bonds with the two ions, so that the zinc source-nickel source can be more firmly adsorbed on the fiber surface, significantly improving the high-temperature resistance and oxidation resistance of the basalt fiber; and the damage to the basalt fiber itself is small, which helps to maintain the original performance and structural integrity of the basalt fiber, and no harmful gases are generated, and the process is more environmentally friendly.

## Description

### TECHNICAL FIELD

The present invention relates to the technical field of basalt fibers, and in particular to a high-temperature-resistant basalt fiber, and a preparation method therefor and use thereof.

### BACKGROUND

Basalt fiber is a high-tech fiber material developed following carbon fiber, aramid fiber, and ultra-high molecular weight polyethylene fiber. It exhibits excellent mechanical properties and high-temperature resistance, and can be widely used in flame-retardant materials, high-temperature filtration, and other fields. However, the basalt fiber prepared from basalt as the main raw material has a temperature tolerance ranging from -269°C to 700°C. When the temperature rises to 700°C or higher, conventional basalt fiber will be difficult to withstand, and its performance will be reduced and damaged, which limits its use in high-temperature fields. Therefore, how to optimize and improve basalt fiber to improve its high-temperature resistance is one of the technical problems that urgently need to be solved in this field.

### SUMMARY OF THE INVENTION

In view of this, the present invention provides a method for preparing a high-temperature-resistant basalt fiber.

The present invention also provides a high-temperature-resistant basalt fiber.

The object of the present invention is achieved through the following technical solution:
In a first aspect, the present invention provides a method for preparing a high-temperature-resistant basalt fiber, the method comprises the following steps:
(1) mixing basalt, zircon, potassium feldspar, rutile and molybdenite, melting the mixture, and drawing the mixture to obtain a matrix material; mixing a zinc source and a nickel source to obtain a mixed solution; and
(2) impregnating the matrix material in the mixed solution, and then solidifying and pressing the impregnated matrix material to obtain the high-temperature-resistant basalt fiber;
wherein, a mass ratio of the zinc source to the nickel source is (4-9):1.

In an optional embodiment, the impregnating is carried out at a temperature ranging from 25°C to 40°C and for a duration ranging from 0.5 hours to 2 hours.

In an optional embodiment, the zinc source comprises at least one of zinc sulfate and zinc fluoroborate.

In an optional embodiment, the nickel source comprises at least one of nickel sulfate and nickel nitrate.

In an optional embodiment, a ratio of the basalt, the rutile, the zircon, the potassium feldspar and the molybdenite is (13-43):(1-3):(1-4):(0.5-4):(1-5) on the basis of parts by weight.

In an optional embodiment, the pressing is hot isostatic pressing, the hot isostatic pressing is carried out at a temperature ranging from 300°C to 400°C, and under a pressure ranging from 50 MPa to 130 MPa.

In an optional embodiment, the melting is carried out at a temperature ranging from 1400°C to 1590°C.

In an optional embodiment, the drawing is carried out at a temperature ranging from 1350°C to 1460°C.

In an optional embodiment, the basalt has a particle size ranging from 0.8 mm to 4 mm.

In an optional embodiment, the rutile has a particle size ranging from 0.21 µm to 0.25 µm.

In an optional embodiment, the zircon has a particle size ranging from 1 mm to 5 mm.

In an optional embodiment, the potassium feldspar has a particle size ranging from 0.03 mm to 0.05 mm.

In an optional embodiment, the molybdenite has a particle size ranging from 0.03mm to0.05mm.

In a second aspect, the present invention provides a high-temperature-resistant basalt fiber, the high-temperature-resistant basalt fiber comprises a matrix material and a functional coating, wherein the functional coating comprises a zinc source and a nickel source.

In an optional embodiment, the functional coating has a thickness ranging from 5 µm to 10 µm.

In a third aspect, the present invention provides use of the high-temperature-resistant basalt fiber in the fields of aerospace, transportation and environmental protection.

Compared with the prior art, the technical solution of the present invention has the following advantages:
1. The method for preparing a high-temperature-resistant basalt fiber provided by the present invention comprises the following steps: mixing basalt, zircon, potassium feldspar, rutile and molybdenite, melting the mixture, and drawing the mixture to obtain a matrix material; mixing a zinc source and a nickel source to obtain a mixed solution; and impregnating the matrix material in the mixed solution, and then solidifying and pressing the impregnated matrix material to obtain the high-temperature-resistant basalt fiber. Zinc element and nickel element have high thermal stability. In the present invention, the matrix material is impregnated in a mixed solution of zinc source and nickel source. The functional groups (silicon hydroxyl group (Si-OH), carboxyl group (-COOH)) on the surface of the basalt fiber can form chemical bonds with the two ions (zinc and nickel ions), so that the zinc source-nickel source can be more firmly adsorbed on the fiber surface thereof, significantly improving the high-temperature resistance and oxidation resistance of the basalt fiber. The process causes minimal damage to the basalt fiber itself, which helps to maintain the original performance and structural integrity of the basalt fiber, and generates no harmful gases, and is more environmentally friendly. By controlling the mass ratio of zinc source to nickel source to 4-9:1, if the proportion of zinc is too high, the exchange reaction between zinc ions and metal ions (Ca²⁺, Al³⁺) in the basalt fiber is intensified, the internal network structure of basalt fiber is destroyed, causing the surface of basalt fiber to become rough, thereby affecting its mechanical properties and chemical stability; if the proportion of zinc is too small, nickel element occupies a dominant position in the solution, changing the charge distribution on the surface of basalt fiber, reducing the bonding force between the functional coating and the surface of basalt fiber, resulting in poor high-temperature resistance, bending strength and corrosion resistance of basalt fiber; if the proportion of nickel is too high, the functional coating and the surface of basalt fiber undergo redox reaction, changing the structure of the surface of basalt fiber, greatly reducing the high-temperature resistance of basalt fiber; if the proportion of nickel is too low, zinc ions occupy a dominant position in the solution, changing the pH value of the solution, thereby affecting the mechanical properties and bonding force of basalt fiber, resulting in poor high-temperature resistance, bending strength and corrosion resistance of basalt fiber.

Molybdenite contains abundant molybdenum elements, and zircon contains abundant zirconium elements; both molybdenum and zirconium have high melting points, which are beneficial to improving the heat resistance of basalt fiber and enable it to maintain excellent performance in extremely high-temperature environments.

The preparation method of the present invention has low cost, is simple in preparation method, has environmentally friendly production process, and is easy to realize industrial production.

2. In the method for preparing a high-temperature-resistant basalt fiber provided by the present invention, impregnation temperature is controlled within the range of 25°C-40°C. If the temperature is too high, the rate of precipitation of the mixed solution on the surface of the basalt fiber is excessively high, easily producing a functional coating having non-uniform thickness and lowering its high-temperature stability; if the solution temperature is too low, the rate of precipitation of the mixed solution on the surface of the basalt fiber is excessively slow, prolonging the formation time of the functional coating, and giving poor bonding force and durability of the functional coating, thereby resulting in poor high-temperature resistance, bending strength and corrosion resistance of the basalt fiber.

3. In the method for preparing a high-temperature-resistant basalt fiber provided by the present invention, the mass ratio of basalt, rutile, zircon, potassium feldspar and molybdenite is controlled to (13-43):(1-3):(1-4):(0.5-4):(1-5). The main components of basalt include SiO₂, which is beneficial to improve the chemical stability and thermal stability of basalt fiber, thereby improving the high-temperature resistance of basalt fiber; the main component of rutile is TiO₂, which can not only improve the chemical stability of basalt fiber, but also increase the surface tension and viscosity of the melt, which is beneficial to increase the drawing strength of basalt fiber.

4. The high-temperature-resistant basalt fiber provided by the present invention comprises a matrix material and a functional coating, wherein the functional coating comprises a zinc source and a nickel source. Compared with conventional basalt fibers, the high-temperature-resistant basalt fibers prepared by the present invention exhibits better flexibility, and a heat-resistant temperature of 820°C-980°C, which is 120°C-200°C higher than that of conventional basalt fibers, while maintaining excellent stability in high-temperature and corrosive environments, and can be widely used in fields such as aerospace, transportation, environmental protection.

### DETAILED DESCRIPTION

The following examples are provided for a better understanding of the present application, are not limited to the preferred implementations, and do not constitute a limitation on the content or scope of protection of the present application. Any product identical or similar to the present application, derived by anyone under the inspiration of the present application or by combining the present application with other features of the prior art, falls within the scope of protection of the present application.

Where specific experimental steps or conditions are not indicated in the examples, the operations or conditions of conventional experimental steps described in the documents in the present art can be followed. The reagents or instruments used without the manufacturer indicated are conventional reagent products that are commercially available.

The present invention is further described below with reference to specific embodiments, which are not to be construed as limiting the scope of protection claimed by the present invention.

### Example 1

This example provided a method for preparing high-temperature-resistant basalt fiber. The method comprised the following steps:
(1) material selection and pretreatment: basalt, zircon, potassium feldspar, rutile and molybdenite were selected and subjected to crushing, screening and magnetic separation pretreatment steps respectively to give basalt particles having a particle size of 0.9 mm, zircon particles having a particle size of 2 mm, potassium feldspar particles having a particle size of 0.04 mm, rutile particles having a particle size of 0.23 µm, and molybdenite having a particle size of 0.03 mm;
(2) mixing: 13 parts by weight of the basalt particles, 1.2 parts by weight of zircon, 1 part by weight of potassium feldspar, 0.5 parts by weight of rutile and 1 part by weight of molybdenite particles were weighed, mixed until a uniformity of 95% was achieved, and stored in a raw material storage container for later use;
(3) melting: the above mixed material was fed into a tank furnace through a quantitative feeder and melted at 1500°C to obtain a basalt fiber melt;
(4) drawing: the basalt fiber melt was transferred to a drawing system, and was drawn at 1380°C through a precision platinum-rhodium alloy drawing leak plate, and then cooled to 75°C to obtain a matrix material; wherein the composition of the matrix material included: SiO₂ 63%, Al₂O₃ 13%, CaO 5%, Fe₂O₃ +FeO 4%, K₂O+Na₂O 3%, TiO₂ 3%, ZrO₂ 5%, and MoO₂ 4%;
(5) surface improvement treatment: zinc sulfate and nickel sulfate were mixed in a mass ratio of 8.5:1.5 to obtain a mixed solution; the matrix material was impregnated in the mixed solution at 30°C for 1 hour to form a film on the surface of the basalt fiber, which was then dried and solidified; and
(6) hot isostatic pressing: the coated basalt fiber was subjected to hot isostatic pressing at 300°C and 55 MPa to obtain a high-temperature-resistant basalt fiber, which comprised the matrix material and a functional coating having a thickness of 8 µm.

### Example 2

This example provided a method for preparing high-temperature-resistant basalt fiber. The method comprised the following steps:
(1) material selection and pretreatment: basalt, zircon, potassium feldspar, rutile and molybdenite were selected and subjected to crushing, screening and magnetic separation pretreatment steps respectively to give basalt particles having a particle size of 0.9 mm, zircon particles having a particle size of 2 mm, potassium feldspar particles having a particle size of 0.04 mm, rutile particles having a particle size of 0.23 µm, and molybdenite having a particle size of 0.03 mm;
(2) mixing: 40 parts by weight of the basalt particles, 1 part by weight of zircon, 1.5 parts by weight of potassium feldspar, 1 part by weight of rutile and 2.5 parts by weight of molybdenite particles were weighed, mixed until a uniformity of 95% was achieved, and stored in a raw material storage container for later use;
(3) melting: the above mixed material was fed into a tank furnace through a quantitative feeder and melted at 1400°C to obtain a basalt fiber melt;
(4) drawing: the basalt fiber melt was transferred to a drawing system, and was drawn at 1400°C through a precision platinum-rhodium alloy drawing leak plate, and then cooled to 100°C to obtain a matrix material; wherein the composition of the matrix material included: SiO₂ 55%, Al₂O₃ 15%, CaO 6%, Fe₂O₃ +FeO 5%, K₂O+Na₂O 4%, TiO₂ 6%, ZrO₂ 4%, and MoO₂ 5%;
(5) surface improvement treatment: zinc sulfate and nickel sulfate were mixed in a mass ratio of 8:2 to obtain a mixed solution; the matrix material was impregnated in the mixed solution at 25°C for 0.5 hours to form a film on the surface of the basalt fiber, which was then dried and solidified; and
(6) hot isostatic pressing: the coated basalt fiber was subjected to hot isostatic pressing at 350°C and 70 MPa to obtain a high-temperature-resistant basalt fiber, which comprised the matrix material and a functional coating having a thickness of 5 µm.

### Example 3

This example provides a method for preparing high-temperature-resistant basalt fiber. The method comprised the following steps:
(1) material selection and pretreatment: basalt, zircon, potassium feldspar, rutile and molybdenite were selected and subjected to crushing, screening and magnetic separation pretreatment steps respectively to give basalt particles having a particle size of 0.9 mm, zircon particles having a particle size of 2 mm, potassium feldspar particles having a particle size of 0.04 mm, rutile particles having a particle size of 0.23 µm, and molybdenite having a particle size of 0.03 mm;
(2) mixing: 43 parts by weight of the basalt particles, 2 parts by weight of zircon, 4 parts by weight of potassium feldspar, 3 parts by weight of rutile and 5 parts by weight of molybdenite particles were weighed, mixed until a uniformity of 95% was achieved, and stored in a raw material storage container for later use;
(3) melting: the above mixed material was fed into a tank furnace through a quantitative feeder and melted at 1590°C to obtain a basalt fiber melt;
(4) drawing: the basalt fiber melt was transferred to a drawing system, and was drawn at 1450°C through a precision platinum-rhodium alloy drawing leak plate, and then cooled to 50°C to obtain a matrix material; wherein the composition of the matrix material included: SiO₂ 59%, Al₂O₃ 12%, CaO 7%, Fe₂O₃ +FeO 3%, K₂O+Na₂O 4%, TiO₂ 6%, ZrO₂ 3%, and MoO₂ 6%;
(5) surface improvement treatment: zinc fluoroborate and nickel nitrate were mixed in a mass ratio of 9:1 to obtain a mixed solution; the matrix material was impregnated in the mixed solution at 40°C for 2 hours to form a film on the surface of the basalt fiber, which was then dried and solidified; and
(6) hot isostatic pressing: the coated basalt fiber was subjected to hot isostatic pressing at 400°C and 130 MPa to obtain a high-temperature-resistant basalt fiber, which comprised the matrix material and a functional coating having a thickness of 6 µm.

### Comparative Example 1

This comparative example provided a method for preparing a high-temperature-resistant basalt fiber, which was the same as the steps in Example 1, except that the mass ratio of zinc sulfate to nickel sulfate was 15:1.5.

### Comparative Example 2

This comparative example provided a method for preparing a high-temperature-resistant basalt fiber, which was the same as the steps in Example 1, except that the mass ratio of zinc sulfate to nickel sulfate was 4:1.5.

### Comparative Example 3

This comparative example provided a method for preparing a high-temperature-resistant basalt fiber, which was the same as the steps in Example 1, except that the mass ratio of zinc sulfate to nickel sulfate was 8.5:2.5.

### Comparative Example 4

This comparative example provided a method for preparing a high-temperature-resistant basalt fiber, which was the same as the steps in Example 1, except that the mass ratio of zinc sulfate to nickel sulfate was 8.5:0.5.

### Comparative Example 5

This comparative example provided a method for preparing a high-temperature-resistant basalt fiber, which was the same as the steps in Example 1, except that the impregnation temperature was 20°C.

### Comparative Example 6

This comparative example provided a method for preparing a high-temperature-resistant basalt fiber, which was the same as the steps in Example 1, except that the impregnation temperature was 45°C.

### Experimental Example

The high-temperature-resistant basalt fibers prepared in Examples 1-3 and Comparative Examples 1-6 were subjected to flexural-flexibility testing using bending toughness testing, and high-temperature resistance testing was conducted according to GB/T 25045-2010 "Basalt Fiber Twisted Roving"; the corrosion resistance test included the following steps: the basalt fibers prepared in each example and comparative example were cut into uniformly sized samples, and then placed in 1mol/L NaOH solution, and allowed to stand for 12 hours. The mass retention rate of each sample was calculated, and the results were shown in the table below; where, mass retention rate (%)=mass of basalt fiber after corrosion/mass of basalt fiber before corrosion×100%.

**Table 1 Performance Test Results of High-temperature-resistant Basalt Fibers Prepared by Examples and Comparative Examples**

| | High-temperature resistance (°C) | Bending strength (MPa) | Mass retention rate (%) |
|---|---|---|---|
| Example 1 | 973 | 797 | 95.8 |
| Example 2 | 964 | 766 | 92.0 |
| Example 3 | 890 | 690 | 91.7 |
| Comparative Example 1 | 769 | 530 | 90.8 |
| Comparative Example 2 | 760 | 526 | 80 |
| Comparative Example 3 | 773 | 553 | 77.5 |
| Comparative Example 4 | 765 | 648 | 76.7 |
| Comparative Example 5 | 783 | 555 | 80.5 |
| Comparative Example 6 | 725 | 540 | 70.5 |

It can be seen from the above table that the basalt fibers prepared in Examples 1 to 3 exhibits good high-temperature resistance, bending strength and corrosion resistance. Compared Comparative Example 1 with the Examples, the basalt fibers of the present invention shows higher performance. This is because zinc accounts for a large proportion in Comparative Example 1, and the exchange reaction between zinc ions and metal ions (Ca³⁺ , Al³⁺ ) in the basalt fibers is aggravated, destroying the internal network structure of the basalt fibers, causing the surface of the basalt fibers to become rough, thereby affecting its mechanical properties and chemical stability. In Comparative Example 2, zinc accounts for a small proportion, and nickel elements dominate in the solution, changing the charge distribution on the surface of the basalt fibers, thereby reducing the bonding force between the functional coating and the surface of the basalt fiber, resulting in poor high-temperature resistance, bending strength, and corrosion resistance of the basalt fiber. In Comparative Example 3, the nickel accounts for a large proportion, and the solution undergoes an redox reaction with the surface of the basalt fiber, changing the structure of the surface of the basalt fiber, reducing the bonding force between the functional coating and the surface of the basalt fiber, thereby affecting the high-temperature resistance of the basalt fiber. In Comparative Example 4, the nickel accounts for a small proportion, and the zinc ions occupy a dominant position in the solution, changing the pH value of the solution, thereby affecting the mechanical properties and bonding force of the basalt fiber, thereby resulting in poor high-temperature resistance, bending strength, and corrosion resistance of the basalt fiber. Compared with the examples, the performance of the basalt fiber in Comparative Example 5 is reduced because the temperature of the zinc-nickel mixed solution is too low, and the precipitation speed of the solution on the surface of the basalt fiber is too slow, resulting in poor bonding and durability of the functional coating. Compared with the examples, the performance of the basalt fiber in Comparative Example 6 is reduced because the impregnation temperature is high, and the rate of precipitation of the mixed solution on the surface of the basalt fiber is excessively high, resulting in the functional coating having non-uniform thickness, reducing stability at high-temperatures.

Obviously, the above examples are merely examples made for clear description, rather limiting the implementations. For those skilled in the art, other different forms of variations or modifications can also be made on the basis of the above-mentioned description. All embodiments are not necessary to be and cannot be exhaustively listed herein. In addition, obvious variations or modifications derived therefrom all fall within the scope of protection of the present invention.

## Claims

1. A method for preparing a high-temperature-resistant basalt fiber, **characterized in that** the method comprises the following steps:
(1) mixing basalt, zircon, potassium feldspar, rutile and molybdenite, melting the mixture, and drawing the mixture to obtain a matrix material; mixing a zinc source and a nickel source to obtain a mixed solution; and
(2) impregnating the matrix material in the mixed solution, and then solidifying and pressing the impregnated matrix material to obtain the high-temperature-resistant basalt fiber;
wherein, a mass ratio of the zinc source to the nickel source is (4-9): 1.

2. The method for preparing the high-temperature-resistant basalt fiber according to claim 1, **characterized in that** the impregnating is carried out at a temperature ranging from 25°C to 40°C and for a duration ranging from 0.5 hours to 2 hours.

3. The method for preparing the high-temperature-resistant basalt fiber according to claim 1, **characterized in that** the zinc source comprises at least one of zinc sulfate and zinc fluoroborate;
and/or, the nickel source comprises at least one of nickel sulfate and nickel nitrate.

4. The method for preparing the high-temperature-resistant basalt fiber according to claim 1, **characterized in that** a ratio of the basalt, the rutile, the zircon, the potassium feldspar and the molybdenite is (13-43):(1-3):(1-4):(0.5-4):(1-5) on the basis of parts by weight.

5. The method for preparing the high-temperature-resistant basalt fiber according to claim 1, **characterized in that** the pressing is hot isostatic pressing, the hot isostatic pressing is carried out at a temperature ranging from 300°C to 400°C, and under a pressure ranging from 50 MPa to 130 MPa.

6. The method for preparing the high-temperature-resistant basalt fiber according to claim 1, **characterized in that** the melting is carried out at a temperature ranging from 1400°C to 1590°C;
and/or, the drawing is carried out at a temperature ranging from 1350°C to 1460°C.

7. The method for preparing the high-temperature-resistant basalt fiber according to claim 1 or claim 4,
**characterized in that** the basalt has a particle size ranging from 0.8 mm to 4 mm;
and/or, the rutile has a particle size ranging from 0.21 µm to 0.25 µm;
and/or, the zircon has a particle size ranging from 1 mm to 5 mm;
and/or, the potassium feldspar has a particle size ranging from 0.03 mm to 0.05 mm;
and/or, the molybdenite has a particle size ranging from 0.03mm to0.05mm.

8. A high-temperature-resistant basalt fiber, **characterized in that** the high-temperature-resistant basalt fiber is prepared by the method according to any one of claims 1 to 7, comprising a matrix material and a functional coating, wherein the functional coating comprises a zinc source and a nickel source.

9. The high-temperature-resistant basalt fiber according to claim 8, **characterized in that** the functional coating has a thickness ranging from 5 µm to 10 µm.

10. Use of the high-temperature-resistant basalt fiber prepared by the method according to any one of claims 1 to 7 or the high-temperature-resistant basalt fiber according to claim 8 or claim 9 in the fields of aerospace, transportation and environmental protection.
